(19) 〔European Patent Office logo〕 Europäisches Patentamt / European Patent Office / Office européen des brevets

(11) **EP 4 137 541 B1**

(12) **EUROPEAN PATENT SPECIFICATION**

(45) Date of publication and mention
of the grant of the patent:
**08.07.2026 Bulletin 2026/28**

(21) Application number: **21788520.1**

(22) Date of filing: **09.04.2021**

(51) International Patent Classification (IPC):
*C08L 27/18* (2006.01)    *C08F 214/26* (2006.01)
*C08F 216/12* (2006.01)    *C08K 5/50* (2006.01)
*C08K 5/18* (2006.01)    *C08K 5/5397* (2006.01)

(52) Cooperative Patent Classification (CPC):
(C-Sets available)
**C08F 214/262; C08K 5/18; C08K 5/50;
C08K 5/5397;** C08F 214/265          (Cont.)

(86) International application number:
**PCT/JP2021/014998**

(87) International publication number:
**WO 2021/210503 (21.10.2021 Gazette 2021/42)**

(54) **FLUORINATED COPOLYMER COMPOSITION AND CROSSLINKED RUBBER ARTICLE**

FLUORCOPOLYMERZUSAMMENSETZUNG UND VERNETZTER KAUTSCHUKGEGENSTAND

COMPOSITION DE COPOLYMÈRE FLUORÉ ET ARTICLE EN CAOUTCHOUC RÉTICULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.04.2020 JP 2020071583**

(43) Date of publication of application:
**22.02.2023 Bulletin 2023/08**

(73) Proprietor: **AGC INC.
Chiyoda-ku,
Tokyo 1008405 (JP)**

(72) Inventor: **KAWAI Tsuyoshi
Tokyo 100-8405 (JP)**

(74) Representative: **Müller-Boré & Partner
Patentanwälte PartG mbB
Friedenheimer Brücke 21
80639 München (DE)**

(56) References cited:
WO-A1-2016/204272     CN-A- 109 337 572
JP-A- 2003 526 705     JP-A- 2008 532 567
JP-A- H06 306 236     JP-A- H06 306 236
US-A- 5 700 879     US-A1- 2008 116 603
US-A1- 2011 263 795     US-B1- 6 465 576

(52) Cooperative Patent Classification (CPC): (Cont.)

C-Sets
**C08F 214/262, C08F 216/1408, C08F 216/1458;**
**C08K 5/18, C08L 27/18;**
**C08K 5/50, C08L 27/18;**
**C08K 5/5397, C08L 27/18;**
C08F 214/265, C08F 210/06, C08F 214/22

**Description**

TECHNICAL FIELD

The present invention relates to a fluorinated copolymer composition and a crosslinked rubber article.

BACKGROUND ART

Crosslinked rubber articles having a fluorinated copolymer crosslinked are excellent in heat resistance, chemical resistance, oil resistance, weather resistance, etc. and thus are widely used in the fields of vehicles, ships, aircraft, general machinery, construction, etc., as sealing materials (e.g. O-rings, packing, oil seals, gaskets) and cushioning materials.

As a fluorinated copolymer composition for producing such crosslinked rubber articles, Patent Document 1 discloses a fluorinated rubber composition comprising a fluorinated rubber obtained by copolymerizing vinylidene fluoride with at least one ethylenic unsaturated monomer copolymerizable with it, an organic peroxide, at least one member selected from a bivalent metal hydroxide and a bivalent metal oxide, and an organic phosphorus compound. Patent Document 2 discloses a crosslinked rubber article such as o-rings, seals and gaskets obtained by a crosslinking composition comprising a TFE/perfluorovinyl ether based fluorinated copolymer having units having a nitrile group, a 50% solution of a triphenyl benzyl phosphonium chloride in methanol as additive and a crosslinking agent.

PRIOR ART DOCUMENT

PATENT DOCUMENT

Patent Document 1: JP-A-H06-306236, Patent Document 2: US 6465576 B1

DISCLOSURE OF INVENTION

TECHNICAL PROBLEM

In recent years, there has been a demand for improving properties of crosslinked rubber articles in various fields. Specifically, crosslinked rubber articles having a low compression set at high temperature have been demanded. To respond to such demands, the present inventor has evaluated a crosslinked rubber article disclosed in Patent Document 1, and as a result found that there is room for improvement on a compression set when a compression set test is carried out at high temperature (hereinafter referred to also as "compression set at high temperature").

Further, as another property required for crosslinked rubber articles, it may be mentioed that crosslinked rubber articles will not be broken, after compression.

The object of the present invention is to provide a fluorinated copolymer composition whereby a crosslinked rubber article which has a low compression set at high temperature and which is not broken after compression can be formed, and a crosslinked rubber article.

SOLUTION TO PROBLEM

As a result of an extensive study on the above problem, the present inventor has found that by using a fluorinated copolymer composition comprising a fluorinated copolymer having nitrile groups, a phosphorus compound having a melting point of 60°C or lower and a crosslinking agent, the desired effects can be obtained, and thus has arrived at the present invention.

That is, the present inventor has found that the above problem can be solved by the following construction.

[1] A fluorinated copolymer composition comprising a fluorinated copolymer having nitrile groups, a phosphorus compound represented by the following formula (7) $P(R^{71})3$ and having a melting point of 60°C or lower and a crosslinking agent. In the formula (7), $R^{71}$ represents a $C_{2-9}$ linear or branched alkyl group.

[2] The fluorinated copolymer composition according to [1], wherein the fluorinated copolymer has units based on a perfluoro(alkyl vinyl ether).

[3] The fluorinated copolymer composition according to [1] or [2], wherein the fluorinated copolymer has units based on tetrafluoroethylene.

[4] The fluorinated copolymer composition according to any one of [1] to [3], wherein the fluorinated copolymer has units based on a monomer having a nitrile group.

[5] The fluorinated copolymer composition according to [4], wherein the monomer having a nitrile group is a monomer represented by the formula (1):

$$CR^{11}R^{12}=CR^{13}\text{-}R^{14}\text{-}CN \qquad (1)$$

In the formula (1), $R^{11}$, $R^{12}$ and $R^{13}$ each independently represent a hydrogen atom, a fluorine atom or a methyl group, and $R^{14}$ represents a $C_{1\text{-}10}$ bivalent perfluorohydrocarbon group or a group having an etheric oxygen atom at a terminal or in a carbon-carbon bond of said perfluorohydrocarbon group.

[6] The fluorinated copolymer composition according to any one of [1] to [5], wherein the fluorinated copolymer is a perfluoropolymer.
[7] The fluorinated copolymer composition according to any one of [1] to [6], wherein the melting point of the phosphorus compound is 35°C or lower.
[8] The fluorinated copolymer composition according to any one of [1] to [7], wherein the content of the phosphorus compound is 0.20 part by mass or higher to 100 parts by mass of the fluorinated copolymer.
[9] The fluorinated copolymer composition according to any one of [1] to [8], wherein the content of the phosphorus compound is 5 parts by mass or lower to 100 parts by mass of the fluorinated copolymer.
[10] The fluorinated copolymer composition according to any one of [1] to [9], wherein the crosslinking agent is a compound having two or more amino groups.
[11] The fluorinated copolymer composition according to any one of [1] to [10], wherein the content of the crosslinking agent is from 0.3 to 10 parts by mass to 100 parts by mass of the fluorinated copolymer.
[12] A crosslinked rubber article which is obtained by crosslinking the fluorinated copolymer in the fluorinated copolymer composition as defined in any one of [1] to [11].

ADVANTAGEOUS EFFECTS OF INVENTION

According to the present invention, it is possible to provide a fluorinated copolymer composition whereby a crosslinked rubber article which has a low compression set at high temperature and which is not broken after compressed, can be formed, and a crosslinked rubber article.

DESCRIPTION OF EMBODIMENTS

The meanings of terms in the present invention are as follows.
A "unit" is a generic name for an atomic group directly formed by polymerization of a monomer and derived from a single molecule of the above monomer, and an atomic group obtained by chemical conversion of a portion of the above atomic group. "Units based on a monomer" may hereinafter be simply referred to also as "units".
"Rubber" means rubber showing properties defined by JIS K6200 (2008), and is distinguished from "resin".
"Melting point" means a temperature corresponding to the maximum value of a melting point peak measured by a differential scanning calorimetry (DSC) method.
"Boiling point" is a value measured by an equilibrium reflux boiling point method, specifically a value measured in accordance with JIS K2233: 2017, 8.1. In a case where the pressure is mentioned after the boiling point, the boiling point is a value measured under the pressure. Unless otherwise specified, the boiling point is a value obtained by converting a value measured by the method of JIS K2233: 2017, 8.1 to a value of a boiling point at 760 mmHg.

[Fluorinated copolymer composition]

The fluorinated copolymer composition of the present invention (hereinafter referred to also as "the present composition") comprises a fluorinated copolymer (hereinafter referred to also as "copolymer (A)") having nitrile groups, a phosphorus compound (hereinafter referred to also as "specific phosphorus compound") having a melting point of 60°C or lower and a crosslinking agent.
The crosslinked rubber article obtained by using the present composition has a low compression set at high temperature (for example, a compression set when a compression set test is carried out after storing a crosslinked rubber article at 300°C for 70 hours) and is not broken after compression.
The details of the reason for this have not been clarified, but the following reasons are estimated.
It is considered that the specific phosphorus compound functions as an acid acceptor when crosslinking the copolymer (A). Here, since the specific phosphorus compound contained in the present composition has a low melting point, the specific phosphorus compound is liquid in the present composition, when crosslinking the copolymer (A) while heating. Accordingly, it is considered that the specific phosphorus compound is dispersed well in the present composition, and the crosslinking of the copolymer (A) uniformly proceeds, whereby the crosslinking density is improved. It is considered that as a result, the compression set at high temperature becomes low.

Further, it is considered that the specific phosphorus compound is uniformly dispersed in a crosslinked rubber article, which suppresses that the specific phosphorus compound becomes a rupture point when compression. It is considered that as a result, break after compression will not result.

<Copolymer (A)>

The copolymer (A) is a polymer having nitrile groups and fluorine atoms. If elongated, the copolymer (A) itself cannot return to its former state, however, if crosslinked, the property to return to its former state is improved, that is, the property of a rubber is obtained.

The copolymer (A) preferably has units having a nitrile group and units based on a perfluoro(alkyl vinyl ether) (hereinafter referred to also as "PAVE") and particularly preferably has units having a nitrile group, PAVE units and units based on tetrafluoroethylene (hereinafter referred to also as "TFE") in that the effects of the present invention will be superior.

The units having a nitrile group are units based on a monomer having a nitrile group (hereinafter referred to also as "$R_{CN}$"). $R_{CN}$ preferably has a fluorine atom and is particularly preferably a monomer represented by the formula (1), in that the effects of the present invention will be superior.

$$CR^{11}R^{12}=CR^{13}-R^{14}-CN \qquad (1)$$

In the formula (1), $R^{11}$, $R^{12}$ and $R^{13}$ each independently represent a hydrogen atom, a fluorine atom or a methyl group, and $R^{14}$ represents a $C_{1-10}$ bivalent perfluorohydrocarbon group or a group having an etheric oxygen atom at a terminal or in a carbon-carbon bond of said perfluorohydrocarbon group.

In that the polymerization reactivity of $R_{CN}$ will be superior, it is preferred that $R^{11}$, $R^{12}$ and $R^{13}$ are fluorine atoms or hydrogen atoms, it is more preferred that all of $R^{11}$, $R^{12}$ and $R^{13}$ are fluorine atoms or all of them are hydrogen atoms, and from the point that the release property and the heat resistance of a crosslinked rubber article will be superior, it is particularly preferred that all of $R^{11}$, $R^{12}$ and $R^{13}$ are fluorine atoms.

$R^{14}$ may be linear, branched or cyclic, preferably linear or branched. The number of carbon atoms in $R^{14}$ is preferably from 2 to 8, more preferably from 3 to 7, further preferably from 3 to 6, particularly preferably from 3 to 5.

$R^{14}$ may have an etheric oxygen atom or may have no etheric oxygen atom, however, $R^{14}$ preferably has an etheric oxygen atom, in that the rubber properties will be superior.

The number of etheric oxygen atoms in $R^{14}$ is preferably from 1 to 3, particularly preferably 1 or 2.

As specific examples of the monomer represented by the formula (1), $CF_2=CFOCF_2CF(CF_3)OCF_2CF_2CN$ (hereinafter referred to also as "8CNVE"), $CF_2=CFO(CF_2)_5CN$ (hereinafter referred to also as "MV5CN"), $CF_2=CFOCF_2CF_2CF_2OCF(CF_a)CN$ and $CF_2=CFO(CF_2)_3CN$ may be mentioned, and 8CNVE and MV5CN are preferred, in that the release property and the heat resistance of a crosslinked rubber article will be superior.

PAVE units are units based on a perfluoro(alkyl vinyl ether).

PAVE is preferably a monomer represented by the formula (2), in that the polymerization reactivity and the rubber properties will be excellent.

$$CF_2=CF-O-R^{f2} \qquad (2)$$

In the formula (2), $R^{f2}$ represents a $C_{1-10}$ perfluoroalkyl group. The number of carbon atoms in $R^{f2}$ is preferably from 1 to 8, more preferably from 1 to 6, further preferably from 1 to 5, particularly preferably from 1 to 3, in that the polymerization reactivity will be superior.

The perfluoroalkyl group may be linear or branched.

As specific examples of PAVE, perfluoro(methyl vinyl ether) (hereinafter referred to also as "PMVE"), perfluoro(ethyl vinyl ether) (hereinafter referred to also as "PEVE") and perfluoro(propyl vinyl ether) (hereinafter referred to also as "PPVE") may be mentioned, and among them, PMVE and PPVE are preferred.

The copolymer (A) may have units based on a monomer other than the above-mentioned monomers (hereinafter referred to also as "other monomer"). As specific examples of such other monomer, vinylidene fluoride (hereinafter referred to also as "VdF"), hexafluoropropylene, chlorotrifluoroethylene, a monomer having two or more polymerizable unsaturated bonds (hereinafter referred to also as "DV"), a monomer represented by the after-mentioned formula (6), ethylene and propylene may be mentioned. Further, a monomer having a halogen atom (hereinafter referred to also as "other monomer having a halogen atom") other than the above-mentioned monomers (for example, bromotrifluoroethylene or iodotrifluoroethylene), may be mentioned.

The DV units are units based on a monomer having two or more polymerizable unsaturated bonds.

As specific examples of the polymerizable unsaturated bond, a double bond (C=C) of carbon atom-carbon atom and a triple bond (C≡C) of carbon atom-carbon atom may be mentioned.

The number of polymerizable unsaturated bonds in DV is preferably from 2 to 6, more preferably 2 or 3, particularly preferably 2, in that the polymerization reactivity will be superior.

DV preferably further has a fluorine atom, in that the compression set of a crosslinked rubber article at high temperature will be further low.

DV is preferably a monomer represented by the formula (3), in that the compression set of a crosslinked rubber article at high temperature will be further low.

$$(CR^{31}R^{32}=CR^{33})_{a3}R^{34} \qquad (3)$$

In the formula (3), $R^{31}$, $R^{32}$ and $R^{33}$ each independently represent a hydrogen atom, a fluorine atom, a methyl group or a trifluoromethyl group, a3 represents an integer of from 2 to 6, and $R^{34}$ represents a $C_{1-10}$ a3 valent perfluorohydrocarbon group or a group having an etheric oxygen atom at a terminal or in a carbon-carbon bond of said perfluorohydrocarbon group. A plurality of $R^{31}$, a plurality of $R^{32}$ and a plurality of $R^{33}$ may be the same or different from one another, however, they are particularly preferably the same.

a3 is preferably 2 or 3, particularly preferably 2.

In that the polymerization reactivity of DV will be superior, it is preferred that $R^{31}$, $R^{32}$ and $R^{33}$ are fluorine atoms or hydrogen atoms, it is more preferred that all of $R^{31}$, $R^{32}$ and $R^{33}$ are fluorine atoms or all of them are hydrogen atoms, and from the point of the heat resistance and the chemical resistance of the crosslinked rubber article, it is particularly preferred that all of $R^{31}$, $R^{32}$ and $R^{33}$ are fluorine atoms.

$R^{34}$ may be linear, branched or cyclic, preferably linear or branched, particularly preferably linear. The number of carbon atoms in $R^{34}$ is preferably from 2 to 10, more preferably from 3 to 8, further preferably from 3 to 6, particularly preferably from 3 to 5.

$R^{34}$ may have an etheric oxygen atom or may have no etheric oxygen atom, however, $R^{34}$ preferably has an etheric oxygen atom, in that the crosslinking reactivity and the rubber properties will be superior.

The number of etheric oxygen atoms in $R^{34}$ is preferably from 1 to 6, more preferably from 1 to 3, particularly preferably 1 or 2. $R^{34}$ preferably has an etheric oxygen atom at a terminal of $R^{34}$.

Among the monomers represented by the formula (3), as specific examples of the preferred monomer, a monomer represented by the formula (4) and a monomer represented by the formula (5) may be mentioned.

$$(CF_2=CF)_2R^{41} \qquad (4)$$

In the formula (4), $R^{41}$ represents a $C_{2-10}$ bivalent perfluorohydrocarbon group or a group having an etheric oxygen atom at a terminal or in a carbon-carbon bond of said perfluorohydrocarbon group.

As specific examples of the monomer represented by the formula (4), $CF_2=CFO(CF_2)_2OCF=CF_2$, $CF_2=CFO(CF_2)_3OCF=CF_2$, $CF_2=CFO(CF_2)_4OCF=CF_2$, $CF_2=CFO(CF_2)_6OCF=CF_2$, $CF_2=CFO(CF_2)_8OCF=CF_2$, $CF_2=CFO(CF_2)_2OCF(CF_3)CF_2OCF=CF_2$, $CF_2=CFO(CF_2)_2O(CF(CF_3)CF_2O)_2CF=CF_2$, $CF_2=CFOCF_2O(CF_2CF_2O)_2CF=CF_2$, $CF_2=CFO(CF_2O)_3O(CF(CF_3)CF_2O)_2CF=CF_2$, $CF_2=CFOCF_2CF(CF_a)O(CF_2)_2OCF(CF_a)CF_2OCF=CF_2$ and $CF_2=CFOCF_2CF_2O(CF_2O)_2CF_2CF_2OCF=CF_2$ may be mentioned.

Among the monomers represented by the formula (4), as specific examples of a more preferred monomer, $CF_2=CFO(CF_2)_aOCF=CF_2$ and $CF_2=CFO(CF_2)_4OCF=CF_2$ may be mentioned.

$$(CH_2=CH)_2R^{51} \qquad (5)$$

In the formula (5), $R^{51}$ represents a $C_{2-10}$ bivalent perfluorohydrocarbon group or a group having an etheric oxygen atom at a terminal or in a carbon-carbon bond of said perfluorohydrocarbon group.

As specific examples of the monomer represented by the formula (5), $CH_2=CH(CF_2)_2CH=CH_2$, $CH_2=CH(CF_2)_4CH=CH_2$ and $CH_2=CH(CF_2)_6CH=CH_2$ may be mentioned.

Among the monomers represented by the formula (5), as a specific example of a more preferred monomer, $CH_2=CH(CF_2)_6CH=CH_2$ may be mentioned.

When DV is copolymerized, the polymerizable double bond at a terminal of DV reacts during the polymerization, whereby a copolymer (A) having a branched chain is obtained.

The formula (6) is as follows:

$$CF_2=CF-O-R^{f6} \qquad (6)$$

In the formula (6), $R^{f6}$ represents a $C_{1-8}$ perfluoroalkyl group having from 1 to 5 etheric oxygen atoms. The number of carbon atoms in $R^{f6}$ is preferably from 1 to 6, particularly preferably from 1 to 5.

As specific examples of the monomer represented by the formula (6), perfluoro(3,6-dioxa-1-heptene), perfluoro(3,6-dioxa-1-octene) and perfluoro(5-methyl-3,6-dioxa-1-nonene) may be mentioned.

In a case where the copolymer (A) contains the $R_{CN}$ units, the content of the $R_{CN}$ units is preferably from 0.05 to 5 mol%, more preferably from 0.1 to 3 mol%, particularly preferably from 0.2 to 1.5 mol% to all units in the copolymer (A), in that the effects of the present invention will be superior.

In a case where the copolymer (A) contains TFE units, the content of TFE units is preferably from 60 to 80 mol%, more preferably from 63 to 75 mol%, particularly preferably from 66 to 72 mol%, to all units in the copolymer (A), in that the effects of the present invention will be superior.

In a case where the copolymer (A) contains PAVE units, the content of PAVE units is preferably from 20 to 40 mol%, more preferably from 24 to 36 mol%, particularly preferably from 27 to 33 mol%, to all units in the copolymer (A), in that the elongation of the crosslinked rubber article will be superior.

In a case where the copolymer (A) contains other monomer units, the content of other monomer units is preferably from 0.01 to 10 mol%, more preferably from 0.5 to 10 mol%, particularly preferably from 1 to 5 mol% to all units in the copolymer (A), in that the rubber properties of the crosslinked rubber article will be excellent.

The copolymer (A) is preferably a perfluoropolymer, in that the effects of the present invention will be superior.

Here, "perfluoropolymer" is a polymer having a chain of carbon atoms as the main chain, having substantially no hydrogen atom bonded to the carbon atom and having fluorine atoms instead of hydrogen atoms. The perfluoropolymer may have a multivalent atom other than a carbon atom in its side chain, and such a multivalent atom is preferably an oxygen atom.

Here, "having substantially no hydrogen atom" means that the content of hydrogen atoms in the perfluoropolymer is 0.5 mass% or lower, preferably 0.1 mass% or lower, more preferably 0.07 mass% or lower, particularly preferably 0.05 mass% or lower. When the content of hydrogen atoms falls within the above range, good heat resistance and good chemical resistance can be easily obtained.

The copolymer (A) may have iodine atoms. In such a case, the copolymer (A) preferably has iodine atoms at a terminal of the polymer chain.

As iodine atoms, iodine atoms derived from an iodine compound which functions as the after-mentioned chain transfer agent and iodine atoms in units based on a monomer having an iodine atom among the above-mentioned other monomers having a halogen atom such as iodotrifluoroethylene may be mentioned, and iodine atoms derived from an iodine compound which functions as the chain transfer agent are preferred.

When the copolymer (A) has iodine atoms, the content of iodine atoms is preferably from 0.01 to 5.0 mass%, more preferably from 0.05 to 2.0 mass%, particularly preferably from 0.05 to 1.0 mass% to the total mass of the copolymer (A). When the content of iodine atoms falls within the above range, the crosslinking reactivity of the copolymer (A) is improved, whereby the mechanical properties of a crosslinked rubber article will be excellent.

The content of the copolymer (A) is preferably from 60 to 99 mass%, more preferably from 70 to 99 mass%, particularly preferably from 80 to 99 mass%, to the total mass of the present composition.

(Method for producing copolymer (A))

One example of the method for producing the copolymer (A) may be a method of copolymerizing the above-mentioned monomers in the presence of a radical polymerization initiator.

As the radical polymerization initiator, a water-soluble polymerization initiator or a redox polymerization initiator is preferred.

Specific examples of the water-soluble polymerization initiator may be persulfates such as ammonium persulfate, sodium persulfate and potassium persulfate, and organic polymerization initiators such as disuccinic acid peroxide and azobisisobutylamidine dihydrochloride, and among them, persulfates are preferred, and ammonium persulfate is more preferred.

As the redox polymerization initiator, a polymerization initiator having a persulfate and a reducing agent combined, may be mentioned. Among them, a polymerization initiator capable of polymerizing each monomer at a polymerization temperature in a range of from 0 to 85°C is preferred. Specific examples of the persulfate to constitute the redox polymerization initiator may be alkali metal salts of persulfate such as ammonium persulfate, sodium persulfate and potassium persulfate, and ammonium persulfate is preferred. Specific examples of the reducing agent to be combined with the persulfate may be a thiosulfate, a sulfite, a hydrogen sulfite, a pyrosulfite and a hydroxymethanesulfinate, a hydroxymethanesulfinate is preferred, and sodium hydroxymethanesulfinate is particularly preferred.

In the method for producing the copolymer (A), the above-mentioned monomers may be copolymerized in the presence of a chain transfer agent with the radical polymerization initiator.

The chain transfer agent is preferably an iodine compound, particularly preferably an iodine compound represented by the formula $RI_2$. In the above formula, R represents an alkylene group or perfluoroalkylene group having at least 3 (preferably from 3 to 8) carbon atoms.

Specific examples of the iodine compound represented by the formula $RI_2$ may be 1,3-diiodopropane, 1,4-diiodobutane, 1,6-diiodohexane, 1,8-diiodooctane, 1,3-diiodoperfluoropropane, 1,4-diiodoperfluorobutane, 1,6-diiodoperfluorohexane and 1,8-diiodoperfluorooctane.

As the iodine compound, an iodine compound having a perfluoroalkylene group is preferred, and 1,4-diiodoperfluorobutane is particularly preferred.

When the above monomers are copolymerized in the presence of such an iodine compound, iodine atoms can be introduced into the copolymer (A).

With respect to details of the components other than the above to be used in the production of the copolymer (A) and the production method, reference may be made to the method described in paragraphs [0019] to [0034] of WO2010/082633.

<Specific phosphorus compound>

The specific phosphorus compound is a phosphorus compound having a melting point of 60°C or lower.

The melting point of the specific phosphorus compound is 60°C or lower, and in that the dispersibility of the specific phosphorus compound is further improved, and the effects of the present invention will be superior, preferably 35°C or lower, particularly preferably 20°C or lower.

Here, a compound which is liquid at 20°C is also included in the above mentioned compound having a melting point of the specific temperature or lower.

The boiling point of the specific phosphorus compound is preferably 50°C or higher, more preferably 100°C or higher, from the point of the handling efficiency.

The specific phosphorus compound is a compound represented by the following formula (7).

$$P(R^{71})_3 \qquad \text{formula (7)}$$

In the formula (7), $R^{71}$ represents a $C_{2-9}$ linear or branched alkyl group. Three $R^{71}$ may be the same or different from one another, however, they are preferably the same, in that the compression set of a crosslinked rubber article at high temperature will be further low.

The number of carbon atoms in $R^{71}$ is from 2 to 9 and preferably from 4 to 9, particularly preferably from 6 to 8, in that the compression set of a crosslinked rubber article at high temperature will be further low.

Three $R^{71}$ are each independently preferably a $C_{2-9}$ linear alkyl group, in that the compression set of a crosslinked rubber article at high temperature will be further low.

Specific examples of the compound represented by the formula (7) may be triethylphosphine (melting point of -86°C, liquid at 20°C, boiling point of from 127 to 128°C), tri-n-propylphosphine (melting point is unknown, liquid at 20°C, boiling point of from 72 to 74°C/12 mmHg), tri-n-butylphosphine (melting point of -65°C, liquid at 20°C, boiling point of 150°C/50 mmHg), tri-tert-butylphosphine (melting point of from 30 to 35°C, liquid or solid at 20°C, boiling point of 102°C/13 mmHg), tri-n-pentylphosphine (melting point is unknown, liquid at 20°C, boiling point is unknown), tri-n-hexylphosphine (melting point is unknown, liquid at 20°C. boiling point of 227°C/50 mmHg) and tri-n-octylphosphine (melting point is unknown, liquid at 20°C, boiling point of 175°C/0.3 mmHg).

Among the specific phosphorus compounds, tri-n-octylphosphine is preferred, in that the compression set of a crosslinked rubber article at high temperature will be further low.

The content of the specific phosphorus compound is preferably 0.01 part by mass or higher, more preferably 0.10 part by mass or higher, particularly preferably 0.20 part by mass or higher, to 100 parts by mass of the copolymer (A), in that the break of a crosslinked rubber article can be further suppressed, and is preferably 0.20 part by mass or higher, particularly preferably 0.25 part by mass or higher, in that the mold release property of a crosslinked rubber article will be excellent.

The content of the specific phosphorus compound is preferably 5 parts by mass or lower, more preferably 2 parts by mass or lower, particularly preferably 1.0 parts by mass or lower, to 100 parts by mass of the copolymer (A), in that the compression set of a crosslinked rubber article at high temperature can be further low.

<Crosslinking agent>

As specific examples of the crosslinking agent, an organic peroxide and a compound having two or more amino groups (hereinafter referred to also as "polyamine compound") may be mentioned, and a polyamine compound is preferred, in that the crosslinkability of the copolymer (A) is excellent, and a crosslinked rubber article having a low compression set at high temperature will be obtained.

The polyamine compound may be a compound of an aliphatic hydrocarbon of which hydrogen atoms are substituted by amino groups or a compound of an aromatic hydrocarbon of which hydrogen atoms are substituted by amino groups, and a compound of an aromatic hydrocarbon of which hydrogen atoms are substituted by amino groups is preferred, in that the effects of the present invention will be superior.

The polyamine compound preferably has a fluorine atom. In such a case, the compatibility with the copolymer (A) will be good, whereby a crosslinked rubber article having a low compression set at high temperature will be obtained.

As specific examples of the polyamine compound, hexamethylenediamine, hexamethylenediamine carbamate, 2,2-bis[4-(4-aminophenoxy)phenyl]propane, 2,2-bis(3-amino-4-hydroxyphenyl)propane, 2,2-bis(3-amino-4-hydroxyphenyl)hexafluoropropane (hereinafter referred to also as "BOAP", another name: bisaminophenol AF), 2,2-bis(3,4-diaminophenyl)propane, 2,2-bis(3,4-diaminophenyl)hexafluoropropane, 2,2-bis(3-amino-4-(N-phenylamino)phenyl) hexafluoropropane, 4,4'-methylenedianiline, m-phenylenediamine, adipic acid dihydrozide and the compound represented by the formula (XII) in Japanese Patent No. 5,833,657 may be mentioned. Among them, BOAP is preferred, in that the effects of the present invention will be superior.

The content of the crosslinking agent is preferably from 0.3 to 10 parts by mass, more preferably from 0.3 to 5 parts by mass, particularly preferably from 0.5 to 3 parts by mass, to 100 parts by mass of the copolymer (A). When the content of the crosslinking agent falls within the above range, the effects of the present invention will be superior.

<Other components>

The present composition may contain components other than those mentioned above to such an extent that the effects of the present invention are not impaired. Such other components may be acid acceptors (e.g. fatty acid esters, fatty acid metal salts, bivalent metal oxides (e.g. magnesium oxide, calcium oxide, zinc oxide, lead oxide, etc.)), fillers and reinforcing agents (e.g. carbon black, barium sulfate, calcium metasilicate, calcium carbonate, titanium oxide, silicon dioxide, a polytetrafluoroethylene (PTFE), a tetrafluoroethylene-perfluoro(alkyl vinyl ether) copolymer (PFA), clay and talc), scorch retardants (e.g. phenolic hydroxy group-containing compounds such as bisphenol A, quinones such as hydroquinone, $\alpha$-methylstyrene dimers such as 2,4-di(3-isopropylphenyl)-4-methyl-1-pentene, etc.), crown ethers (e.g. 18-crown-6, etc.) and lubricants (e.g. sodium stearate, etc.).

In a case where the present composition contains other components, the total content of other components is preferably higher than 0.1 parts by mass and 30 parts by mass or lower, more preferably from 1 to 15 parts by mass, particularly preferably from 3 to 5 parts by mass, to 100 parts by mass of the copolymer (A).

As the method for preparing the present composition, a method of mixing the above-mentioned respective components may be mentioned. The mixing of the respective components may be carried out by using a mixing device for rubber, such as a roll, a kneader, a Banbury mixer or an extruder.

Further, after the above respective components are mixed to obtain a mixture, the mixture may be formed. Specific examples of the method of forming the mixture may be compression molding, injection molding, extrusion, calendering, and a method of dissolving the mixture in a solvent and applying the solution to e.g. a substrate by dipping or coating.

[Crosslinked rubber article]

The crosslinked rubber article of the present invention is a rubber article which is obtainable by crosslinking the copolymer (A) in the above mentioned present composition.

As the method for crosslinking the copolymer (A) in the present composition, a method of crosslinking the copolymer by heating the present composition is preferred.

As specific examples of the crosslinking method by heating, heat press crosslinking, steam crosslinking and hot air crosslinking may be mentioned, and from such methods, a suitable method may be properly selected in consideration of the form and application of the present composition.

The heating conditions are preferably at from 100 to 400°C for from 1 second to 24 hours.

The crosslinked rubber obtained by heating (primary crosslinking) the present composition may be further heated for secondary crosslinking. By conducting the secondary crosslinking, it is possible to stabilize or improve the mechanical properties, compression set and other properties of the crosslinked rubber.

Heating conditions at the time of conducting the secondary crosslinking are preferably from 80 to 350°C for from 30 minutes to 48 hours. When heating, the temperature may be gradually increased or decreased.

A crosslinking method other than crosslinking the copolymer (A) by heating, may be a method of crosslinking the copolymer (A) by irradiating the present composition with radiation. Specific examples of the radiation to be applied may be electron beams and ultraviolet rays.

<Physical properties>

The compression set of the crosslinked rubber article at 300°C for 70 hours is preferably 70% or lower, and it is more preferably 50% or lower, particularly preferably 30% or lower, most preferably 15% or lower in that the copolymer (A) is crosslinked well, and the shape recovery of the crosslinked rubber article after pressurization will be superior.

The compression set of the crosslinked rubber article at 300°C for 70 hours is measured by the method described in the after described Examples.

The tensile strength (tensile break strength) of the crosslinked rubber article is preferably from 10 to 50 MPa, particularly preferably from 15 to 40 MPa, in that rubber properties are excellent.

The tensile elongation (degree of elongation at break) of the crosslinked rubber article is preferably from 100 to 500%, particularly preferably from 150 to 400%, in that the rubber properties are excellent.

The tensile strength and the tensile elongation of the crosslinked rubber article are values measured by methods in accordance with JIS K6251: 2010 (ISO37: 2005).

The hardness (Shore-A) of the crosslinked rubber article is preferably from 55 to 90, more preferably from 60 to 85, in that the rubber properties are excellent.

The hardness (Shore-A) of the crosslinked rubber article is a value measured with respect to a molded product having a plate shape (thickness of 1 mm) of the crosslinked rubber article by using a type A durometer in accordance with JIS K6253-1: 2012.

<Applications>

The crosslinked rubber article is suitable as a material for e.g. O-rings, sheets, gaskets, oil seals, diaphragms and V-rings. Further, it is also useful for applications, such as heat-resistant chemical-resistant sealing materials, heat-resistant oil-resistant sealing materials, electric wire coating materials, sealing materials for semiconductor manufacturing equipment, sealing materials for liquid crystal display panel manufacturing equipment, sealing materials for LED manufacturing equipment, corrosion-resistant rubber paints, sealing materials for urea-resistant grease, etc., rubber paints, adhesive rubber, hoses, tubes, calendered sheets (rolls), sponges, rubber rolls, members for oil drilling, heat dissipating sheets, solution crosslinkers, rubber sponges, bearing seals (urea resistant grease, etc.), lining (chemical resistant), automotive insulating sheets, insulating sheets for electronic equipment, rubber bands for watches, packings for endoscope (amine resistant), bellows hoses (processed from calendered sheets), packings/valves for water heaters, fenders (marine civil engineering, ships), fibers and non-woven fabrics (protective clothing, etc.), sealing materials for substrate, rubber gloves, stators for uniaxial eccentric screw pumps, parts for urea SCR systems, vibration isolators, damping agents, sealants, additives to other materials, and toys.

EXAMPLES

Hereinafter, the present invention will be described in detail with reference to Examples. Ex. 1 and Ex. 4 are Examples of the present invention, and Ex. 2 and Ex. 3 are Comparative Examples. However, the present invention is not limited to these Examples. The blend amounts of the respective components in Table given later are based on mass.

[Measurement of composition of fluorinated copolymer]

The contents (mol%) of the respective units in the fluorinated copolymer were calculated by the $^{19}$F-nuclear magnetic resonance (NMR) analysis. Here, the content of propylene units was calculated by $^1$H and $^{13}$C-nuclear magnetic resonance (NMR) analysis.

[Hardness]

The hardness (Shore-A) of a test specimen of the crosslinked rubber article was measured by using a type A durometer in accordance with JIS K6253-3: 2012.

Here, as the measuring apparatus, an automatic hardness meter for rubbers (Digitest Shore-A, manufactured by H·Bareiss) was used.

Further, the test was carried out by using three test specimens, and an arithmetic mean of measured values of the three test specimens was recorded.

[Tensile strength and tensile elongation]

The tensile strength and the tensile elongation were measured by using test specimens having a plate-shaped crosslinked rubber article (thickness of 1 mm) punched out by a No. 4 dumbbell in accordance with JIS K6251: 2010 (ISO37: 2005).

Here, as the measuring apparatus, a tensile tester having a data processer (Quick reader TS-2530, manufactured by UESHIMA SEISAKUSHO CO., LTD.) was used.

Further, each test was carried out by using three test specimens, and an arithmetic mean of measured values of the three test specimens was recorded.

[Compression set at high temperature]

The compression set (%) when a test specimen of the crosslinked rubber article was stored at 300°C for 70 hours, was measured in accordance with JIS K 6262:2013. Here, as the test specimen, an O-ring test specimen of P26 in accordance with JIS B 2401-1: 2012 was used. The test was carried out by using two test specimens, and an arithmetic mean of measured values of the two test specimens was used.

The compression set was calculated by the following formula. Here, the specimen is superior as the compression set is closer to 0%.

Compression set (%) = (thickness of original test specimen - thickness of test specimen 30 minutes after removed from compression apparatus) ÷ (thickness of original specimen - thickness of spacer) × 100

[Break after compression]

Regarding the two test specimens after the above-described test of "compression set at high temperature", the occurrence of break was visually observed.

Regarding the two test specimens in each example, the results are shown in the after-mentioned Table 1, as a case where no break was observed on two specimens, is represented by "non", a case where the break was observed on one specimen is represented by "1/2 break", and a case where the break was observed on two specimens is represented by "2/2 break".

[Mold release test]

A fluorinated copolymer composition was added in a sheet shape mold, the fluorinated copolymer composition was crosslinked at 180°C for 20 minutes to obtain a crosslinked rubber article (length of 100 mm × width of 60 mm × thickness of 1 mm) attached to the mold. Immediately after the completion of the crosslinking reaction, air was sprayed on an interface between the crosslinked rubber article and the mold by using an air gun (product name: Cyclone duster, manufactured by Chuo Kuki Co., Ltd.), and the mold release property was evaluated by the following evaluation standard.

Here, the temperature of the crosslinked rubber article at the time of air spray was considered to be about 180°C, since air was sprayed immediately after the completion of the crosslinking reaction.

<Spray condition of air by air gun>

Pressure: 0.5 MPa
Time of spraying air: 3 seconds

<Evaluation standard>

○: The crosslinked rubber article was released from the mold.
△: A part of the crosslinked rubber article was not released from the mold.
×: The majority of the crosslinked rubber article was not released from the mold.

[Production of copolymer (A-1)]

A stainless steel pressure resistant reactor equipped with anchor blades and having an internal volume of 20 L, was deaerated, then 7.2 L of ultrapure water, 880 g of a 30 mass% solution of $C_2F_5OCF_2CF_2OCF_2COONH_4$ as the emulsifier, 7.3 g of 8CNVE and 15.9 g of a 5 mass% aqueous solution of disodium hydrogen phosphate 12 hydrate, were charged, and the gas phase was replaced with nitrogen. While stirring at a rate of 375 rpm by using the anchor blades, 137 g of TFE and 635 g of PMVE were injected into the reactor, and then the internal temperature was raised to 80°C. The inner pressure of the reactor was 0.90 MPa (gauge). 28 mL of a 3 mass% aqueous solution of ammonium persulfate (APS) was added to initiate polymerization. When the ratio of added monomers injected before the initiation of polymerization (hereinafter referred to as initial monomers) is, as represented by a molar ratio, TFE:PMVE:8CNVE = 26.3:73.3:0.4.

After the initiation of the polymerization, along with the progress of the polymerization, monomers were injected as follows. Hereinafter, addition of monomers by injection after the initiation of polymerization is referred to as "post addition", and monomers injected after the initiation of polymerization are referred to as "post addition monomers".

At the time when the inner pressure of the reactor decreased to 0.89 MPa (gauge), TFE was injected to raise the inner pressure of the reactor to 0.90 MPa (gauge). This operation was repeated, and every time when 119.3 g of TFE was injected, 3.7 g of 8CNVE, 74 g of PMVE and 3.7 g of 8CNVE were injected in this order.

When the polymerization rate began to decrease, a 3 mass% aqueous solution of APS was appropriately added. The total amount of the 3 mass% aqueous solution of APS added after the initiation of the polymerization was 35 mL.

At the time when the cycle in which the total mass of TFE added reached 1,073.7 g finished, 119.3 g of TFE was injected. At the time when the total mass of post addition TFE reached 1,193 g, the addition of the post addition monomers was terminated, and the inner temperature of the reactor was decreased to 10°C to terminate the polymerization reaction thereby to obtain a latex containing a fluorinated copolymer. The polymerization time was 375 minutes. Further, the total mass of the post addition monomers added was such that TFE was 1,193 g, PMVE was 666 g, 8CNVE was 66.6 g, and as calculated as molar ratio, TFE:PMVE:8CNVE = 74.0:25.0:1.0.

The latex was added to a 5 mass% aqueous solution of potassium aluminum sulfate to precipitate the fluorinated copolymer, and the fluorinated copolymer was separated. The fluorinated copolymer was filtrated, washed with ultrapure water and vacuum-dried at 50°C to obtain a white fluorinated copolymer (hereinafter referred to as "copolymer (A-1)"). The molar ratio of the respective units in the obtained fluorinated copolymer (A-1) was TFE units:PMVE units:8CNVE units = 69.1:30.3:0.6.

[Copolymer (H-1)]

The "fluorinated rubber-1" in the section of Examples of JP-A-H06-306236 was used as a copolymer (H-1). The molar ratio of the respective units in the copolymer (H-1) was VdF units:TFE units:propylene units=35:40:25.

[Ex. 1 to 4]

The components in blending amounts as identified in Table 1 were kneaded by a two-roll mill for 10 minutes at room temperature to obtain mixed fluorinated copolymer compositions.

The obtained fluorinated copolymer compositions were heat-pressed under the primary crosslinking conditions shown below to obtain crosslinked rubber sheets having a thickness of 1 mm (primary crosslinking). The primary crosslinking in each of Ex.1, Ex.2 and Ex. 4 was carried out by hot press at 180°C for 20 minutes. The primary crosslinking in Ex.3 was carried out by hot press at 170°C for 10 minutes.

Then, the crosslinked rubber sheets were heated in an oven in a nitrogen atmosphere under conditions shown below (secondary crosslinking). The secondary crosslinking in each of Ex.1, Ex.2 and Ex. 4 was carried out by heating at 90°C for 3 hours, then raising the temperature to 305°C over 5 hours and heating at 305°C for 13 hours. The secondary crosslinking in Ex.3 was carried out by heating at 230°C for 24 hours.

Then, the crosslinked rubber sheets were cooled to room temperature to obtain crosslinked rubber sheets of Ex. 1 to 4.

Using the obtained crosslinked rubber sheets, the above-mentioned physical properties were measured. The measurement results are shown in Table 1.

A summary of the respective components listed in Table 1, except for the fluorinated copolymers, is given below.

BOAP: 2,2-bis(3-amino-4-hydroxyphenyl)hexafluoropropane, polyamine compound (crosslinking agent)

Perhexa 25B: trade name, manufactured by Nippon Oil & Fats, Co., Ltd. 2,5-dimethyl-2,5-di(tert-butylperoxy)hexane, organic peroxide (crosslinking agent)

Perkadox 14: trade name, manufactured by Kayaku Akzo Corporation, $\alpha,\alpha$'-bis(tert-butylperoxy)-p-diisopropylbenzene, organic peroxide (crosslinking agent)

TOCP: manufactured by Hokko Chemical Industry Co., Ltd., tri-n-octylphosphine (liquid at 20°C), specific phosphorus compound

[Table 1]

|  |  |  | Ex. 1 | Ex. 2 | Ex. 3 | Ex. 4 |
|---|---|---|---|---|---|---|
| Copolymer | (A-1) | parts by mass | 100 | 100 | 0 | 100 |
|  | (H-1) | parts by mass | 0 | 0 | 100 | 0 |
| Crosslinking agent | BOAP | parts by mass | 1.5 | 1.5 | 0 | 1 |
|  | Perhexa 25B | parts by mass | 0 | 0 | 1 | 0 |
|  | Perkadox 14 | parts by mass | 0 | 0 | 1 | 0 |
| Specific phosphorus compound | TOCP | parts by mass | 0.3 | 0 | 0.5 | 0.3 |
| Hardness |  | shore A | 71.7 | 72.4 | 59.7 | 64 |
| Tensile strength |  | MPa | 24.7 | 19.6 | 12.5 | 21.0 |
| Tensile elongation |  | % | 218 | 209 | 460 | 236 |
| Compression set at high temperature |  | % | 13 | 12 | >100 | 12 |
| Break after compression |  | - | Non | 1/2 break | 2/2 break | Non |
| Mold release property |  | - | - | - | - | ○ |

In Table 1, ">100" in the column of the compression set at high temperature means a value larger than 100%.
It is evident from Table 1 that by using the present composition comprising the copolymer (A), the crosslinking agent and the specific phosphorus compound (Ex. 1 and 4), a crosslinked rubber article which has a low compression set at high temperature and which is not broken after compression can be formed.

**Claims**

1.  A fluorinated copolymer composition comprising a fluorinated copolymer having nitrile groups, a phosphorus compound represented by the following formula (7) and having a melting point of 60°C or lower determined by the method mentioned in the specification and a crosslinking agent:

    $$P(R^{71})_3 \qquad \text{formula (7)}$$

    in the formula (7), $R^{71}$ represents a $C_{2\text{-}9}$ linear or branched alkyl group.

2.  The fluorinated copolymer composition according to Claim 1, wherein the fluorinated copolymer has units based on a perfluoro(alkyl vinyl ether).

3.  The fluorinated copolymer composition according to Claim 1 or 2, wherein the fluorinated copolymer has units based on tetrafluoroethylene.

4.  The fluorinated copolymer composition according to any one of Claims 1 to 3, wherein the fluorinated copolymer has units based on a monomer having a nitrile group.

5.  The fluorinated copolymer composition according to Claim 4, wherein the monomer having a nitrile group is a monomer represented by the formula (1):

    $$CR^{11}R^{12}=CR^{13}\text{-}R^{14}\text{-}CN \qquad (1)$$

    In the formula (1), $R^{11}$, $R^{12}$ and $R^{13}$ each independently represent a hydrogen atom, a fluorine atom or a methyl group, and $R^{14}$ represents a $C_{1\text{-}10}$ bivalent perfluorohydrocarbon group or a group having an etheric oxygen atom at a terminal or in a carbon-carbon bond of said perfluorohydrocarbon group.

6.  The fluorinated copolymer composition according to any one of Claims 1 to 5, wherein the fluorinated copolymer is a perfluoropolymer.

7. The fluorinated copolymer composition according to any one of Claims 1 to 6, wherein the melting point of the phosphorus compound is 35°C or lower.

8. The fluorinated copolymer composition according to any one of Claims 1 to 7, wherein the content of the phosphorus compound is 0.20 part by mass or higher to 100 parts by mass of the fluorinated copolymer.

9. The fluorinated copolymer composition according to any one of Claims 1 to 8, wherein the content of the phosphorus compound is 5 parts by mass or lower to 100 parts by mass of the fluorinated copolymer.

10. The fluorinated copolymer composition according to any one of Claims 1 to 9, wherein the crosslinking agent is a compound having two or more amino groups.

11. The fluorinated copolymer composition according to any one of Claims 1 to 10, wherein the content of the crosslinking agent is from 0.3 to 10 parts by mass to 100 parts by mass of the fluorinated copolymer.

12. A crosslinked rubber article which is obtained by crosslinking the fluorinated copolymer in the fluorinated copolymer composition as defined in any one of Claims 1 to 11.

**Patentansprüche**

1. Fluorcopolymerzusammensetzung, umfassend ein fluoriertes Copolymer mit Nitrilgruppen, eine Phosphorverbindung, die durch die folgende Formel (7) dargestellt wird und einen Schmelzpunkt von 60°C oder weniger, bestimmt durch das in der Beschreibung genannte Verfahren, aufweist, und ein Vernetzungsmittel:

$$P(R^{71})_3 \qquad \text{Formel (7)}$$

wobei, in der Formel (7), $R^{71}$ eine lineare oder verzweigte $C_{2-9}$-Alkylgruppe darstellt.

2. Fluorcopolymerzusammensetzung nach Anspruch 1, wobei das fluorierte Copolymer Einheiten auf der Basis eines Perfluor(alkylvinylethers) aufweist.

3. Fluorcopolymerzusammensetzung nach Anspruch 1 oder 2, wobei das fluorierte Copolymer Einheiten auf der Basis von Tetrafluorethylen aufweist.

4. Fluorcopolymerzusammensetzung nach einem der Ansprüche 1 bis 3, wobei das fluorierte Copolymer Einheiten auf der Basis eines Monomers mit einer Nitrilgruppe aufweist.

5. Fluorcopolymerzusammensetzung nach Anspruch 4, wobei das Monomer mit einer Nitrilgruppe ein Monomer, dargestellt durch die Formel (1), ist:

$$CR^{11}R^{12}=CR^{13}\text{-}R^{14}\text{-}CN \qquad (1)$$

wobei, in der Formel (1), $R^{11}$, $R^{12}$ und $R^{13}$ jeweils unabhängig voneinander ein Wasserstoffatom, ein Fluoratom oder eine Methylgruppe darstellen, und $R^{14}$ eine zweiwertige $C_{1-10}$-Perfluorkohlenwasserstoffgruppe oder eine Gruppe, die ein Ethersauerstoffatom an einem Ende oder in einer Kohlenstoff-Kohlenstoff-Bindung dieser Perfluorkohlenwasserstoffgruppe aufweist, darstellt.

6. Fluorcopolymerzusammensetzung nach einem der Ansprüche 1 bis 5, wobei das fluorierte Copolymer ein Perfluorpolymer ist.

7. Fluorcopolymerzusammensetzung nach einem der Ansprüche 1 bis 6, wobei der Schmelzpunkt der Phosphorverbindung 35°C oder weniger beträgt.

8. Fluorcopolymerzusammensetzung nach einem der Ansprüche 1 bis 7, wobei der Gehalt der Phosphorverbindung 0,20 Massenteile oder mehr, bezogen auf 100 Massenteile des fluorierten Copolymers, beträgt.

9. Fluorcopolymerzusammensetzung nach einem der Ansprüche 1 bis 8, wobei der Gehalt der Phosphorverbindung 5

**EP 4 137 541 B1**

Massenteile oder weniger, bezogen auf 100 Massenteile des fluorierten Copolymers, beträgt.

10. Fluorcopolymerzusammensetzung nach einem der Ansprüche 1 bis 9, wobei das Vernetzungsmittel eine Verbindung mit zwei oder mehr Aminogruppen ist.

11. Fluorcopolymerzusammensetzung nach einem der Ansprüche 1 bis 10, wobei der Gehalt des Vernetzungsmittels von 0,3 bis 10 Massenteile, bezogen auf 100 Massenteile des fluorierten Copolymers, beträgt.

12. Vernetzter Kautschukartikel, der durch Vernetzen des fluorierten Copolymers in der Fluorcopolymerzusammensetzung nach einem der Ansprüche 1 bis 11 erhalten wird.

**Revendications**

1. Composition de copolymère fluoré comprenant un copolymère fluoré ayant des groupes nitrile, un composé de phosphore représenté par la formule suivante (7) et ayant un point de fusion de 60 °C ou inférieur déterminé par le procédé mentionné dans la spécification et un agent de réticulation :

$$P(R^{71})_3 \qquad \text{formule (7)}$$

dans la formule (7), $R^{71}$ représente un groupe alkyle linéaire ou ramifié en $C_{2-9}$.

2. Composition de copolymère fluoré selon la revendication 1, dans laquelle le copolymère fluoré a des unités basées sur un éther perfluoro(alkylvinylique).

3. Composition de copolymère fluoré selon la revendication 1 ou 2, dans laquelle le copolymère fluoré a des unités basées sur du tétrafluoroéthylène.

4. Composition de copolymère fluoré selon l'une quelconque des revendications 1 à 3, dans laquelle le copolymère fluoré a des unités basées sur un monomère ayant un groupe nitrile.

5. Composition de copolymère fluoré selon la revendication 4, dans laquelle le monomère ayant un groupe nitrile est un monomère représenté par la formule (1) :

$$CR^{11}R^{12}=CR^{13}R^{14}\text{-CN} \qquad (1)$$

dans la formule (1), $R^{11}$, $R^{12}$ et $R^{13}$ représentent chacun indépendamment un atome d'hydrogène, un atome de fluor ou un groupe méthyle, et $R^{14}$ représente un groupe perfluorohydrocarbure bivalent en $C_{1-10}$ ou un groupe ayant un atome d'oxygène éthérique à une terminaison ou dans une liaison carbone-carbone dudit groupe perfluorohydrocarbure.

6. Composition de copolymère fluoré selon l'une quelconque des revendications 1 à 5, dans laquelle le copolymère fluoré est un perfluoropolymère.

7. Composition de copolymère fluoré selon l'une quelconque des revendications 1 à 6, dans laquelle le point de fusion du composé de phosphore est de 35 °C ou inférieur.

8. Composition de copolymère fluoré selon l'une quelconque des revendications 1 à 7, dans laquelle la teneur en le composé de phosphore est de 0,20 partie en masse ou supérieure sur 100 parties en masse du copolymère fluoré.

9. Composition de copolymère fluoré selon l'une quelconque des revendications 1 à 8, dans laquelle la teneur en le composé de phosphore est de 5 parties en masse ou inférieure sur 100 parties en masse du copolymère fluoré.

10. Composition de copolymère fluoré selon l'une quelconque des revendications 1 à 9, dans laquelle l'agent de réticulation est un composé ayant deux groupes amino ou plus.

11. Composition de copolymère fluoré selon l'une quelconque des revendications 1 à 10, dans laquelle la teneur en l'agent de réticulation va de 0,3 à 10 parties en masse sur 100 parties en masse du copolymère fluoré.

**15**

12. Article en caoutchouc réticulé qui est obtenu en réticulant le copolymère fluoré dans la composition de copolymère fluoré selon l'une quelconque des revendications 1 à 11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06306236 A
- US 6465576 B1
- WO 2010082633 A
- JP 5833657 B